# EUROPEAN PATENT SPECIFICATION

(11) **EP 0 982 676 B1**
(45) Date of publication and mention of the grant of the patent: **01.10.2008**
(21) Application number: 99111323.4
(22) Date of filing: 10.06.1999
(51) Int. Cl.: G06F 3/033

(54) **A method and apparatus for a virtual display/keyboard for a PDA**
Verfahren und Vorrichtung für eine virtuelle Anzeige/Tastatur für einen PDA
Procédé et dispositif pour une affichage/clavier pour un assistant numérique personnel

(30) Priority: 27.08.1998 US 141400
(43) Date of publication of application: 01.03.2000
(73) Proprietor: Hewlett-Packard Company (a Delaware Corporation), Palo ALto CA 94304 (US)
(72) Inventor: Carau, Frank P. Sr., Loveland, Colorado 80538 (US)
(74) Representative: Schoppe, Fritz

(56) References cited:
- EP-A- 0 626 636
- DE-U- 29 802 435
- US-A- 5 510 806
- US-A- 5 786 810
- US-A- 5 789 739

## Description

### FIELD OF THE INVENTION

The present invention relates generally to the field of personal digital assistants (PDAs) and more particularly to keyboards for PDAs. In particular, this invention provides a space saving virtual display/keyboard for a PDA.

### BACKGROUND OF THE INVENTION

Personal digital assistants (PDAs), such as the Apple Newton or the Palm PILOT, have become very useful devices for carrying personal notes, calendars, appointments, phone numbers, 'to do' lists, etc. PDAs are hand held personal computers that help to manage personal information. It would be desirable for PDAs to be as small as possible, such as the size of a credit card, so that they could be carried in a wallet, purse, pocket, brief case, etc. Two of the main limiting factors to the size of PDA's is the requirement for a reasonable quality display and some means for user input, such as a keyboard or area for pen input. To date there has been a tremendous tug-of-war between the desirable small size for portability and the larger size necessary for user input. Accordingly, it would be desirable for a PDA to be relatively small for portability, yet also have a reasonably sized display and user input area.

EP 554 492 discloses interfaces for direct data or command input by the human user. The hand and finger movements on a virtual keyboard (e.g., a table-top) are monitored by an optical system, such that appropriate image processing can detect the user's intent. All fingers are tracked permanently.

US-A-5,789,739 is directed to an optical detection device which may include two range and/or angle measurement devices. These devices are designed to be used with a physically-solid presentation surface such as a monitor or a shop window pane. It is described that it is possible to design the presentation surface as a projection surface. However, no computer utilizing a Digital Micro mirror Display to project a virtual display of data representative of a computer display and a virtual keyboard pattern of keys onto a surface is described.

EP-A-0 626 636 is directed to an information processing system which includes a camera to monitor conditions on a desk. An image representing the output from the information processing system is displayed on the desk. No computer utilizing a Digital Micro mirror Display to project a virtual keyboard pattern of keys onto a surface is described, rather a physical keyboard is used. The camera monitors the conditions on the desk; it does not sense which keys on a virtual keyboard are selected.

DE 298 02 435 U1 is directed to an ATM machine having a projector displaying a virtual keyboard and an electronic camera which supplies input to a computer. No computer utilizing a Digital Micro mirror Display to project a virtual display of data representative of a computer display and a virtual keyboard pattern of keys onto a surface is shown.

US 5,953,153 discloses spatial light modulators for modulating incident light to form an optical light image.

US 5,767,842 deals with a method of user command or data acquisition in a processing system that allows for analysis of human hand and finger motions. The activities are then interpreted as operations on a physically non-existent input device, such as a virtual keyboard.

US 5,969,698 describes a portable electronics equipment (such as a radio, cellular and cordless telephone, pager and the like) that uses a modulated laser beam to display a virtual keyboard.

US-A-5,786,810 is directed to a method and apparatus for determining an object position using positional information.

US-A-5,510,806 is directed to a portable computer having an LCD projection display system.

It is the object of the invention to provide a reasonably sized user input area for a computer.

This object is achieved by a method according to claim 1 and by an apparatus according to claim 5. These claims are delimited against DE 298 02 435 U1.

### SUMMARY OF THE INVENTION

The above and other aspects of the present invention are accomplished in a personal digital assistant (PDA) having a virtual display/keyboard. In the PDA according to the present invention, the PDA uses a projection display to create a virtual screen and a projection "finger sensor" to create a virtual keyboard on any flat, light colored surface.

The invention is defined by the claims.

### BRIEF DESCRIPTION OF THE DRAWINGS

The above and other objects, features and advantages of the present invention will be better understood by reading the following more particular description of the invention, presented in conjunction with the following drawings, wherein:
Figure 1 illustrates a top view of a virtual display/keyboard for a PDA according to the present invention;
Figure 2 illustrates a side view of a virtual display/keyboard for a PDA according to the present invention; and
Figure 3 illustrates a top view of a virtual display/keyboard for a PDA having projection lasers and sensors for determining finger stroke positioning according to the present invention.

### DETAILED DESCRIPTION OF THE PREFERRED EMBODIMENT

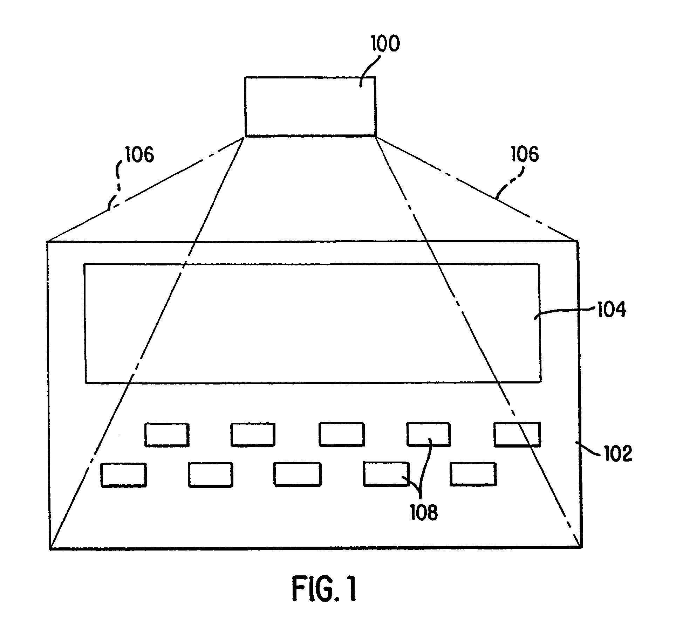

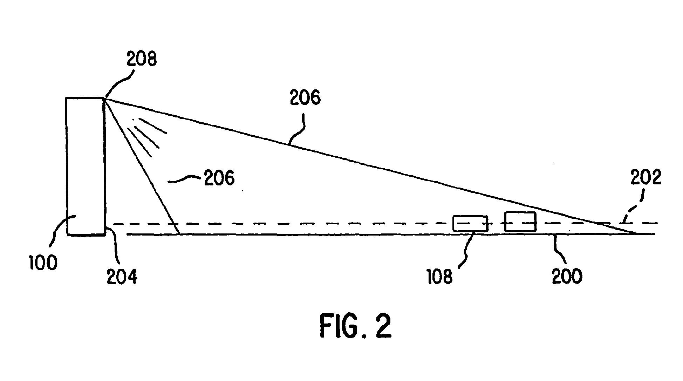

Figure 1 shows a top view of a PDA 100 projecting a virtual display 104 and a virtual keyboard 108 onto a flat, light colored surface 102. The projection surface 102 would preferably be a substantially white surface, such as a sheet of paper. Also, the virtual keys on the virtual keyboard 108 need not be, but may preferably be in a staggered pattern to allow for laser sensor pick-up, as shown in Figure 2. The projection 106 may be accomplished by a digital micro mirror display.. One example would be the Texas Instruments Digital Micro mirror Display (DMD).

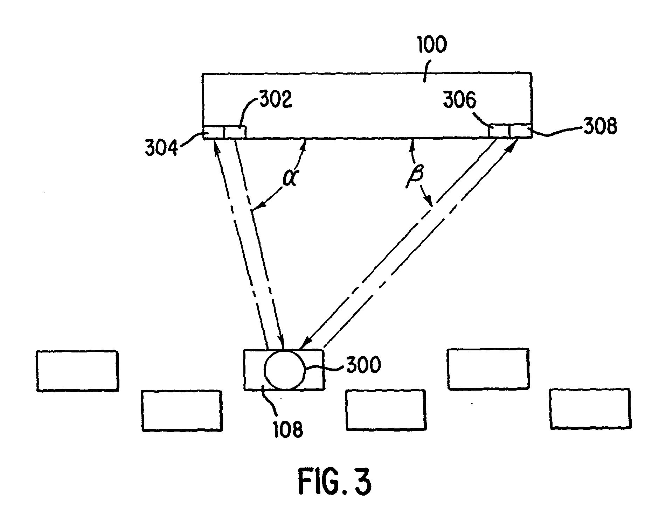

Figure 2 shows a side view of PDA 100 with projection 206 being emitted from a top edge 208 of the PDA card 100 onto a substantially flat, light colored surface 200, such as a white sheet of paper. Finger sensing of virtual keyboard keys 108 is accomplished by means of laser beams 202 emitted from a bottom edge 204 of PDA card 100 just above the surface of the flat, light colored surface 200. Accordingly, each laser 302 and 306 (see Fig. 3) would sense when a finger or pen 300 had broken the laser beam 202 by sensing the reflection from the finger 300 of the returned laser light to a sensor device 304 and 308, such as a CCD array, see Figure 3. Measuring the laser angle α and β for each of two lasers 302 and 306 to the finger 300 would identify the exact key location 108. This allows the PDA 100 to sense that the user had "touched" a key 108, either as a keystroke or a pointing action.

In operation, any data that would normally be displayed on a notebook screen or computer CRT will be projected onto the flat, light colored surface 200 by means of a Digital Micro mirror Display. Also, virtual keys of a keyboard 108 will be projected on to the light colored surface 200 in a staggered fashion, such that when the user touched or points to a particular key, laser sensors 204 at the bottom edge of the PDA card 100 will detect which key is being indicated and the PDA 100 will accept the input as if a key on an actual keyboard had been depressed. Also, as the application of the PDA changes from, for example, a calendar to an address book or to a personal notebook, the functions of the various keys on the virtual keyboard may change to correspond to the associated application of the PDA 100. It should also be noted that the PDA projects a virtual display screen 104 and virtual keyboard 108 that is substantially larger than the area of the PDA. This is how the dual goals of a small PDA size for portability and a large display/user input area is accomplished - by projecting a much larger display/keyboard from a small PDA card.

The foregoing description of the present invention has been presented for purposes of illustration and description. It is not intended to be exhaustive or to limit the invention to the precise form disclosed, and other modifications and variations may be possible in light of the above teachings. For example, the present invention may also be utilized in personal notebooks, personal computers, recreational computer games or in any similar situation where there is a need to conserve the space typically utilized for the computer display and user input/keyboard for the purposes of portability or changing desk top configurations, etc. The embodiment was chosen and described in order to best explain the principles of the invention and its practical application to thereby enable others skilled in the art to best utilize the invention in various embodiments and various modifications as are suited to the particular use contemplated.

## Claims

1. A method for creating a virtual display (104) and keyboard (108) for a computer comprising the following steps:
(a) said computer utilizing a device to project said virtual display (104) of data representative of a computer display and said virtual keyboard pattern of keys (108) onto a substantially flat, light colored surface (102, 200) located remotely from said computer; and
(b) said computer sensing whether virtual keys are selected by direct manipulation of said virtual keys with a finger or other object (300),
**characterized in that**
said computer utilizes a digital micro mirror display (106) as a device for projecting the virtual display (104) and the virtual keyboard pattern of keys (108) in step (a); and
said sensing when virtual keys are selected comprises the following steps:
(i) said computer projecting a laser beam (202) adjacent to said substantially flat, light colored surface (102, 200); and
(ii) said laser beam (202) being projected across said virtual keyboard pattern of keys (108) such that input is created when said laser beam (202) is intercepted by said finger or other object (300), and said computer processes said input as if a physical key on a physical keyboard had been selected.

2. The method according to claim 1, wherein said computer is a PDA (100).

3. The method according to claim 1 or 2, wherein said substantially flat, light colored surface (102, 200) is white.

4. The method according to claim 1 or 2, wherein said substantially flat, light colored surface is a substantially white piece of paper (102, 200).

5. A computer, comprising:
a device for projecting a virtual display (104) and a virtual keyboard (108) onto a substantially flat, light colored surface (102, 200) located remotely from said computer;
**characterized in that**
said device for projecting the virtual display (104) and the virtual keyboard (108) is a digital micro mirror display (106) positioned within said computer;
said computer further comprises two lasers (302, 306) and two sensors (304, 308) directed substantially toward said projection direction of said a digital micro mirror display (106),
said sensors (204, 308) being adapted to detect whether beams from said two lasers (302, 306) are intercepted over a virtual key of said virtual keyboard (108) thereby creating input; and
said computer is adapted to process said input as if a physical key on a physical keyboard had been selected.

6. The computer according to claim 5, wherein said computer is a PDA (100).

## Patentansprüche

1. Ein Verfahren zum Erzeugen einer virtuellen Anzeige (104) und einer Tastatur (108) für einen Computer, das folgende Schritte aufweist:
(a) Verwenden einer Vorrichtung durch den Computer, um die virtuelle Anzeige (104) von Daten, die eine Computeranzeige darstellen, und das virtuelle Tastaturmuster aus Tasten (108) auf eine im Wesentlichen flache, hellfarbige Oberfläche (102, 200) zu projizieren, die entfernt von dem Computer angeordnet ist; und
(b) Erfassen durch den Computer, ob virtuelle Tasten durch direkte Manipulation der virtuellen Tasten mit einem Finger oder einem anderen Objekt (300) ausgewählt werden,
**dadurch gekennzeichnet, dass**
der Computer eine digitale Mikrospiegelanzeige (106) als eine Vorrichtung zum Projizieren der virtuellen Anzeige (104) und des virtuellen Tastaturmusters aus Tasten (108) bei Schritt (a) verwendet; und
das Erfassen, wenn virtuelle Tasten ausgewählt werden, folgende Schritte aufweist:
(i) das Projizieren eines Laserstrahls durch den Computer benachbart zu der im Wesentlichen flachen, hellfarbigen Oberfläche (102, 200); und
(ii) das Projizieren des Laserstrahls (202) über das virtuelle Tastaturmuster aus Tasten (108), derart, dass eine Eingabe erzeugt wird, wenn der Laserstrahl durch den Finger oder ein anderes Objekt (300) abgefangen wird, und der Computer die Eingabe verarbeitet, als ob eine physische Taste auf einer physischen Tastatur ausgewählt worden wäre.

2. Das Verfahren gemäß Anspruch 1, bei dem der Computer ein PDA (100) ist.

3. Das Verfahren gemäß Anspruch 1 oder 2, bei dem die im Wesentlichen flache, hellfarbige Oberfläche (102, 200) weiß ist.

4. Das Verfahren gemäß Anspruch 1 oder 2, bei dem die im Wesentlichen flache, hellfarbige Oberfläche ein im Wesentlichen weißes Stück Papier (102, 200) ist.

5. Ein Computer, der folgende Merkmale aufweist:
eine Vorrichtung zum Projizieren einer virtuellen Anzeige (104) und einer virtuellen Tastatur (108) auf eine im Wesentlichen flache, hellfarbige Oberfläche (102, 200), die entfernt von dem Computer angeordnet ist;
**dadurch gekennzeichnet, dass**
die Vorrichtung zum Projizieren der virtuellen Anzeige (104) und der virtuellen Tastatur (108) eine digitale Mikrospiegelanzeige (106) ist, die in dem Computer positioniert ist;
der Computer ferner zwei Laser (302, 306) und zwei Sensoren (304, 308) aufweist, die im Wesentlichen hin zu der Projektionsrichtung der digitalen Mikrospiegelanzeige (106) gerichtet sind,
wobei die Sensoren (304, 308) angepasst sind, um zu erfassen, ob Strahlen von den zwei Lasern (302, 306) über eine virtuelle Taste der virtuellen Tastatur (108) abgefangen werden, wodurch eine Eingabe erzeugt wird; und
der Computer angepasst ist, um die Eingabe zu verarbeiten, als ob eine physische Taste auf einer physischen Tastatur ausgewählt worden wäre.

6. Der Computer gemäß Anspruch 5, wobei der Computer ein PDA (100) ist.

## Revendications

1. Procédé pour créer un écran (104) et un clavier (108) virtuels pour un ordinateur comprenant les étapes suivantes :
(a) ledit ordinateur utilisant un dispositif pour projeter ledit écran virtuel (104) à partir de données représentatives d'un écran d'ordinateur et la configuration de touches dudit clavier virtuel (108) sur une surface de couleur claire sensiblement plane (102, 200) située à distance dudit ordinateur ; et
(b) ledit ordinateur détectant si des touches virtuelles sont sélectionnées par une manipulation directe desdites touches virtuelles avec un doigt ou autre objet (300),
**caractérisé en ce que**
ledit ordinateur utilise une matrice à micromiroirs (106) en tant que dispositif pour projeter l'écran virtuel (104) et la configuration de touches du clavier virtuel (108) à l'étape (a) ; et
ladite détection de quand les touches virtuelles sont sélectionnées comprend les étapes suivantes :
(i) ledit ordinateur projetant un faisceau laser (202) adjacent à ladite surface de couleur claire sensiblement plane (102, 200) ; et
(ii) ledit faisceau laser (202) étant projeté à travers la configuration de touches dudit clavier virtuel (108) de sorte qu'une entrée soit créée lorsque ledit faisceau laser (202) est intercepté par ledit doigt ou autre objet (300), et ledit ordinateur traite ladite entrée comme si une touche physique sur un clavier physique avait été sélectionnée.

2. Procédé selon la revendication 1, dans lequel ledit ordinateur est un assistant personnel numérique ou PDA (100).

3. Procédé selon la revendication 1 ou 2, dans lequel ladite surface de couleur claire sensiblement plane (102, 200) est blanche.

4. Procédé selon la revendication 1 ou 2, dans lequel ladite surface de couleur claire sensiblement plane est un morceau de papier sensiblement blanc (102, 200).

5. Ordinateur, comprenant :
un dispositif pour projeter un écran virtuel (104) et un clavier virtuel (108) sur une surface de couleur claire sensiblement plane (102, 200) située à distance dudit ordinateur ;
**caractérisé en ce que**
ledit dispositif pour projeter l'écran virtuel (104) et le clavier virtuel (108) est une matrice à micromiroirs (106) positionnée à l'intérieur dudit ordinateur ;
ledit ordinateur comprend en outre deux lasers (302, 306) et deux capteurs (304, 308) dirigés sensiblement vers ladite direction de projection de ladite matrice à micromiroirs (106),
lesdits capteurs (204, 308) étant adaptés pour détecter si des faisceaux provenant desdits deux lasers (302, 306) sont interceptés sur une touche virtuelle dudit clavier virtuel (108) créant ainsi une entrée ; et
ledit ordinateur est adapté pour traiter ladite entrée comme si une touche physique sur un clavier physique avait été sélectionnée.

6. Ordinateur selon la revendication 5, dans lequel ledit ordinateur est un assistant personnel numérique ou PDA (100).
